(19)

**Europäisches Patentamt**
**European Patent Office**
**Office européen des brevets**

(11) **EP 4 197 622 A1**

(12) **EUROPÄISCHE PATENTANMELDUNG**

(43) Veröffentlichungstag:
**21.06.2023 Patentblatt 2023/25**

(21) Anmeldenummer: **21215853.9**

(22) Anmeldetag: **20.12.2021**

(51) Internationale Patentklassifikation (IPC):
*B01D 61/02* (2006.01)      *B01D 69/12* (2006.01)
*B01D 71/52* (2006.01)      *B01J 31/40* (2006.01)

(52) Gemeinsame Patentklassifikation (CPC):
**B01D 71/52; B01D 61/027; B01D 67/0011;**
**B01D 69/02; B01D 69/12; B01J 31/4061**

(84) Benannte Vertragsstaaten:
**AL AT BE BG CH CY CZ DE DK EE ES FI FR GB**
**GR HR HU IE IS IT LI LT LU LV MC MK MT NL NO**
**PL PT RO RS SE SI SK SM TR**
Benannte Erstreckungsstaaten:
**BA ME**
Benannte Validierungsstaaten:
**KH MA MD TN**

(71) Anmelder: **Evonik Operations GmbH**
**45128 Essen (DE)**

(72) Erfinder:
- **SCHÄPERTÖNS, Marc**
  **45657 Recklinghausen (DE)**
- **FRANKE, Robert**
  **45772 Marl (DE)**
- **DREIMANN, Jens Martin**
  **44141 Dortmund (DE)**

- **GLUTH, Frederik**
  **45472 Mülheim an der Ruhr (DE)**
- **KUCMIERCZYK, Peter**
  **44628 Herne (DE)**
- **FRIDAG, Dirk**
  **45721 Haltern am See (DE)**
- **GEERKENS, Sebastian**
  **47802 Krefeld (DE)**
- **MAURER, Christian**
  **43701 Zanesville (DE)**
- **GRZENIA, David**
  **45665 Recklinghausen (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(54) **MEMBRANEN AUS POLYARYLETHERKETONEN AUF UNTERSTRUKTUREN AUS POLYARYLETHERKETONEN UND DEREN VERWENDUNG IN DER ABTRENNUNG HOMOGENER KATALYSATOREN**

(57)      Die vorliegende Erfindung betrifft eine Membran, bestehend aus einer Unterstruktur die ein Polyaryletherketon (PAEK) enthält, und einer darauf aufgebrachten trennaktiven Schicht, die aus einem Polyaryletherketon (PAEK) besteht. Ein weiterer Gegenstand der Erfindung ist ein Verfahren zur Herstellung dieser Membranen und der Einsatz bei der Abtrennung homogener Katalysatoren aus Reaktionsgemischen.

EP 4 197 622 A1

**Beschreibung**

Gegenstand der Erfindung ist eine Membran, bestehend aus einer Unterstruktur die ein Polyaryletherketon (PAEK) enthält, und einer darauf aufgebrachten trennaktiven Schicht, die aus einem Polyaryletherketon (PAEK) besteht. Ein weiterer Gegenstand der Erfindung ist ein Verfahren zur Herstellung dieser Membranen und der Einsatz bei der Abtrennung homogener Katalysatoren aus Reaktionsgemischen.

Membranen für die Abtrennung von Stoffen aus Mischungen von mehreren Stoffen bestehen üblicherweise aus mehreren Schichten: Die für die eigentliche Abtrennung maßgebliche Schicht ist die trennaktive Schicht, die üblicherweise die oberste der Feedmischung zugewandte Schicht der Membran darstellt. In speziellen Fällen kann zur Feedseite hin eine zusätzliche Schutzschicht vorliegen, z.B. bei Dünnschichtkompositmembranen. Unter der trennaktiven Schicht befindet sich die Unterstruktur, auf die die trennaktive Schicht aufgetragen wird und die unter anderem der mechanischen Stabilisierung der trennaktiven Schicht dient. Die Unterstruktur kann dabei aus einer oder mehreren Schichten, die mit direkter Verankerung miteinander verbunden sind, bestehen. Unterhalb der Unterstruktur können je nach Membran weitere Lagen angeordnet sein.

Im Stand der Technik sind Membranen, die eine trennaktive Schicht aus Polyaryletherketon (PAEK), insbesondere Polyetheretherketon (PEEK) aufweisen, bekannt, beispielsweise aus der WO 2015/110843 A1. Als Unterstruktur dient dabei vor allem Polypropylen (PP), weil Polypropylen ein häufig verwendetes, günstiges und gewöhnliches Material ist. Ein anderes häufig genutztes Polymer für Unterstrukturen ist z. B. Polyethylenterephthalat (PET).

Für Anwendungen in manchen aggressiven Medien, beispielsweise saure oder basische Medien, sind nur wenige Materialien stabil. In solchen Gemischen liegen Bedingungen vor, die insbesondere Kondensationspolymere spalten können womit bestimme Polymere wie PET erst gar nicht eingesetzt werden können. Andere Polymere wie Polypropylen (PP) oder Polyethylen (PE) sind unter diesen Bedingungen zwar prinzipiell stabil, diese Polymere haben jedoch oft den Nachteil einer niedrigen Glasübergangstemperatur (Tg) oder einer Kaltverformung unterhalb der Tg sowie geringer Stabilität in manchen organischen Lösemitteln. So lassen sich aktive Membranschichten aus PAEK auf Unterstrukturen aus PP nur bedingt bei Temperaturen nahe der Tg von PAEK trocknen, weil hier schon die Unterstruktur zum Verfließen und zur Verformung neigt.

Ein weiterer Nachteil der für die Unterstruktur bekannten Materialien ist, dass diese zu starker Quellung neigen können. Im Membrankomposit, also dem Verbund aus trennaktiver Schicht und Unterstruktur, kann dies zu einer derart stark unterschiedlichen Quellung führen, die eine Verformung des Membrankomposits zu Folge haben kann. Derartige Verformungen können wiederum zu einer mechanischen Schwächung bis hin zur Zerstörung des Membrankomposits führen.

Ausgehend von den beschriebenen Nachteilen der Membranen aus dem Stand der Technik ergab sich die zugrundeliegende Aufgabe eine Membran bereitzustellen, die diese Nachteile nicht aufweist. Insbesondere sollte die Membran in aggressiven Medien stabil sein, bei höheren Temperaturen zu verarbeiten sein und bei höheren Temperaturen einsetzbar sein, und eine Verformung durch Quellung möglichst unterbleiben.

Die zugrundeliegende Aufgabe der vorliegenden Erfindung wird durch die Bereitstellung einer Membran nach Anspruch 1 gelöst. Derartige Membranen können durch das in Anspruch 7 beschriebene Verfahren hergestellt werden. Bevorzugte Ausführungsformen sind in den Unteransprüchen angegeben.

Eine erfindungsgemäße Membran ist eine Membran, die eine auf einer Unterstruktur aufgebrachten trennaktiven Schicht umfasst, wobei

die trennaktive Schicht aus einem Polyaryletherketon (PAEK) besteht.

die Unterstruktur ein Polyaryletherketon (PAEK) enthält; und wobei

die Unterstruktur eine höhere Permeanz aufweist als die trennaktive Schicht.

Die Permeanz (Engl.: permeance) ist das wesentliche Unterscheidungsmerkmal zwischen der trennaktiven Schicht, an der bzw. in der die gewünschte Trennung abläuft, und der Unterstruktur, die keine Trennwirkung entfalten soll. Mit Permeanz ist im Rahmen der vorliegenden Erfindung der Druck-normalisierte Fluss (Engl.: pressure-normalized flux) gemeint. Für Membranen, welche in der Gastrennung eingesetzt werden, ist für Permeanz eine häufig genutzte Einheit gpu (Engl.: Gas Permeation Units). Für Membranen im Bereich der organophilen Nanofiltration (Engl.: Organic Solvent Nanofiltration) hat sich die Einheit L $m^{-2}$ $h^{-1}$ $bar^{-1}$ bewährt. Die Permeanz ist von der Permeabilität zu unterscheiden, da Permeabilität neben Druck auch in Bezug auf die Schichtdicke normalisiert (Engl.: thickness-normalized) ist. Es ist erfindungsgemäß bevorzugt, wenn die Unterstruktur keinen nennenswerten Transportwiderstand gegenüber der zu trennenden Mischung bietet und daher eine mindestens zweifach höhere Permeanz, vorzugsweise eine mindestens 10-fach höhere Permeanz, besonders bevorzugt eine mindestens 100-fach höhere Permeanz aufweist als die trennaktive Schicht.

Zur Messung der Permeanz von Unterstrukturen eignet sich z.B. eine Messung der Luftdurchlässigkeit nach DIN EN ISO 9073-15 (August 2008). Die Messung von Luftdurchlässigkeit nach diesem Verfahren findet aufgrund der hohen Durchlässigkeit bei Differenzdrücken von nur etwa 2 mbar statt. Zur Messung der Luftdurchlässigkeit von trennaktiven Schichten bzw. Membrankompositen werden aufgrund des viel höheren Transportwiderstands bevorzugt höhere Differenzdrücke von über 1 bar verwendet.

Gängige Membranen für den Einsatz in der organophilen Nanofiltration haben in Lösemitteln wie Aceton oder Toluol eine Permeanz im Bereich von etwa 0,1 bis 10 L m$^{-2}$ h$^{-1}$ bar$^{-1}$. Nanofiltrationsmembranen werden daher typi-scherweise bei Differenzdrücken zwischen 20 bis 40 bar (20000 bis 40000 mbar) im Temperaturbereich leicht über Raumtemperatur (z.B. 30 bis 40 °C) vermessen, entweder als Flachmembranen mit aktiven Membranflächen von ca. 80 cm$^2$ oder als kleine Spiralwickelelemente mit aktiven Membranflächen von 0,1 bis 2 m$^2$. Die Permeanz einer PEEK-Membran im System 43 : 57 w/w Methanol: Methyloctanoat bei 20 bar Transmembrandruck und 40 °C ist zum Beispiel etwa 0,2 L m$^{-2}$ h$^{-1}$ bar$^{-1}$.

Die erfindungsgemäße Membran aus trennaktiver Schicht und Unterstruktur ist vorzugsweise säurestabil. Der Begriff "säurestabil" meint im Rahmen der vorliegenden Erfindung, dass die Membran mindestens 300 h in Anwesenheit der Säure des Katalysatorsystems, insbesondere einer Brönsted-Säure mit einem pKs $\leq$ 5, besonders bevorzugt mit einem pKs $\leq$ 3 oder einer LewisSäure mit einem LAU-Wert von mehr als 25, vorzugsweise mit einem LAU-Wert von 29, stabil ist und nicht zerstört wird, d. h. die trennaktive Schicht und die Unterstruktur bleiben intakt.

Die erfindungsgemäße trennaktive Schicht besteht wie erwähnt aus einem Polyaryletherketon (PAEK). PAEK zeichnet sich dadurch aus, dass innerhalb der Widerholungseinheit Arylgruppen über mindestens eine Etherfunktionalität und mindestens eine Ketonfunktionalität verknüpft sind. Eine erfindungsgemäß bevorzugte trennaktive Schicht besteht aus einem Polyetheretherketon (PEEK). Es hat sich gezeigt, dass diese Materialien chemisch besonders stabil sind, insbesondere auch gegenüber Säuren. Als trennaktive Schicht wird weiterhin bevorzugt ein Polyaryletherketon (PAEK) mit einem Sulfonierungsgrad von weniger als 20%, besonders bevorzugt von weniger als 10%, besonders bevorzugt Polyetheretherketon (PEEK) mit einem Sulfonierungsgrad von weniger als 20%, besonders bevorzugt von weniger als 10% eingesetzt. Der Sulfonierungsgrad kann darüber bestimmt werden, dass zunächst die Gehalte von Kohlenstoff (C) und Schwefel (S) bestimmt werden. Dies kann beispielsweise mittels Elementaranalyse oder für Schwefel auch mittels Titration erfolgen. Der Sulfonierungsgrad kann dann anhand der folgenden Formel berechnet werden:

$$\text{Sulfonierungsgrad (\%)} = \frac{\text{experimentell bestimmtes Verhältnis von S zu C in der Probe}}{\text{theor. Verhältnis von S zu C bei 100\%iger Sulfonierung}} * 100$$

Es ist möglich, dass das für die Herstellung eingesetzte PAEK-Rohpolymer schon einen geringen Anteil an Schwefel enthalten kann, was einem Sulfonierungsgrad von bis zu 3 % entsprechen kann. Dieser geringe Anteil an Schwefel kann z. B. aus dem Einsatz des Hochtemperaturlösemittels Diphenylsulfon bei der Herstellung resultieren und entspricht nicht zwangsläufig einer Sulfonierung. Es kann daher in bestimmten Fällen notwendig sein, den Schwefelgehalt des Rohpolymers vor der Verarbeitung zur Membran zu kennen und zu berücksichtigen, um den Sulfonierungsgrad der resultierenden Membran korrekt zu bestimmen.

Die Unterstruktur enthält erfindungsgemäß ein Polyaryletherketon (PAEK), vorzugsweise aus einem Polyetheretherketon (PEEK). Im Gegensatz zur trennaktiven Schicht kann die Unterstruktur auch andere Komponenten, beispielsweise andere Polymere enthalten. Es ist erfindungsgemäß jedoch bevorzugt, wenn das Polyaryletherketon (PAEK), vorzugsweise das Polyetheretherketon (PEEK) die Hauptkomponente ist, d. h. die Unterstruktur zu mehr als 50 Gew.-% aus dem Polyaryletherketon (PAEK) besteht, vorzugsweise dem Polyetheretherketon (PEEK). In einer bevorzugten Ausführungsform der vorliegenden Erfindung besteht die Unterstruktur zu mindestens 90 Gew.-% aus dem Polyaryletherketon (PAEK), vorzugsweise dem Polyetheretherketon (PEEK), weiterhin bevorzugt zu mindestens 99 Gew.-% aus dem Polyaryletherketon (PAEK), vorzugsweise dem Polyetheretherketon (PEEK). In einer besonders bevorzugten Ausführungsform besteht die Unterstruktur ausschließlich aus dem Polyaryletherketon (PAEK), vorzugsweise dem Polyetheretherketon (PEEK). Es hat sich gezeigt, dass diese Materialien chemisch besonders stabil sind, insbesondere auch gegenüber Säuren.

Die Unterstruktur kann dabei aus mehreren Schichten bestehen, wobei die einzelnen Schichten aus unterschiedlichen Materialien, z.B. unterschiedlichen Polymeren, Mischungen aus unterschiedlichen Materialien, oder Verbundsystemen bestehen können, wobei die vorgenannten bevorzugten Mindestmengen an Polyaryletherketon (PAEK), vorzugsweise dem Polyetheretherketon (PEEK) vorhanden sein müssen. Im einfachsten Fall besteht die Unterstruktur aus einer einzigen Schicht. Unterstrukturen aus PAEK im Rahmen dieser Erfindung sind zum Beispiel von der Firma Technical Fibre Products Ltd. (Cumbria, UK) verfügbar.

Die erfindungsgemäße Membran ist vorzugsweise eine Nanofiltrationsmembran, welche bei 40 °C eine Permeanz für einfache aromatische Kohlenwasserstoffe, bspw. Toluol, von 0,01 bis 10 L m$^{-2}$ h$^{-1}$ bar$^{-1}$, sowie einen Molecular Weight Cutoff (MWCO) zwischen 100 bis 2000 Da aufweist. Der MWCO ist als das Molekulargewicht einer Komponente mit einem Rückhalt durch die Membran von 90% definiert.

Ein weiterer Gegenstand der vorliegenden Erfindung ist die Herstellung der erfindungsgemäßen Membranen. Das Verfahren zur Herstellung der erfindungsgemäßen Membranen umfasst zumindest die folgenden Schritte:

a) Herstellen einer Polymerlösung, umfassend ein Polyaryletherketon (PAEK), vorzugsweise ein Polyetheretherketon (PEEK), und mindestens ein Lösemittel;

b) Bereitstellen einer Unterstruktur, die ein Polyaryletherketon (PAEK) enthält und die eine höhere Permeanz aufweist als die nachfolgend gebildete trennaktive Schicht;

c) Auftragen der Polymerlösung auf die Unterstruktur;

d) Durchführen einer Phaseninversion durch Eintauchen der Unterstruktur, auf die in Schritt c) die Polymerlösung aufgetragen worden ist, in einer Flüssigkeit, vorzugsweise einer wässrigen Flüssigkeit, wodurch sich die trennaktive Schicht ausbildet.

In Schritt a) des erfindungsgemäßen Verfahrens wird zunächst eine Polymerlösung hergestellt, die dann nachfolgend auf die Unterstruktur aufgetragen werden kann. Als Polymer wird entsprechend ein Polyaryletherketon (PAEK), vorzugsweise ein Polyetheretherketon (PEEK) oder ein Polyetherketonketon (PEKK) eingesetzt. Hier können kommerziell verfügbare Rohstoffe eingesetzt werden, beispielsweise das Polyetheretherketon (PEEK) der Marke VESTAKEEP® 4000 von der Evonik Industries AG, KetaSpire® von der Solvay GmbH oder PEEK 450G™ von Victrex™. Die Rohpolymere können vor Einsatz in a) optional in der Schmelze filtriert werden, um z. B. Stippen, Gele oder andere Verunreinigungen zu entfernen. Es eignet sich z. B. eine Tiefenfiltration bei Temperaturen oberhalb von 350 °C mit Filtern mit Filterfeinheiten von 10 bis 50 $\mu$m.

Als Lösemittel kann jedes Lösemittel eingesetzt werden, in dem sich das eingesetzte Polyaryletherketon (PAEK) oder das eingesetzte Polyetheretherketon (PEEK) lösen. Bevorzugt wird im Rahmen der vorliegenden Erfindung eine Säure oder eine Mischung von zwei oder mehr Säuren eingesetzt. In einer weiterhin bevorzugten Ausführungsform der vorliegenden Erfindung wird als Lösemittel in Schritt a) Methansulfonsäure, Schwefelsäure oder eine Mischung aus Methansulfonsäure und Schwefelsäure eingesetzt. Ganz besonders bevorzugt wird als Lösemittel eine Mischung aus Methansulfonsäure und Schwefelsäure eingesetzt, wobei das Masseverhältnis Methansulfonsäure : Schwefelsäure im Bereich von 6 : 1 bis 1 : 1 liegt. Die hieraus resultierenden Polymerlösungen weisen vorzugsweise Viskositäten zwischen 1000 mPa·s und 200000 mPa·s auf, besonders bevorzugt zwischen 5000 mPa·s und 100000 mPa·s. Die Polymerlösung kann vor dem Einsatz in den nachfolgenden Schritten optional filtriert werden, um z. B. Stippen, Gele oder andere Verunreinigungen zu entfernen. Die Polymerlösung kann vor dem Einsatz in den nachfolgenden Schritten auch entgast werden, um Luftblasen zu entfernen.

In Schritt b) wird eine Unterstruktur bereitgestellt, die ein Polyaryletherketon (PAEK), vorzugsweise ein Polyetheretherketon (PEEK) enthält und die eine höhere Permeanz aufweist als die nachfolgend gebildete trennaktive Schicht. Die Unterstruktur weist insbesondere eine mindestens zweifach höhere Permeanz, vorzugsweise eine mindestens 10-fach höhere Permeanz, besonders bevorzugt eine mindestens 100-fach höhere Permeanz auf als die nachfolgend gebildete trennaktive Schicht. Entsprechende Unterstrukturen sind dem Fachmann geläufig. Da die Unterstruktur eine stabilisierende Funktion ausübt ist wichtig, dass sie eine höhere Permeanz aufweist und somit keinen wesentlichen Massentransferwiderstand ausübt. Die Unterstruktur muss ebenfalls eine geeignete Oberflächenbeschaffenheit für die Beschichtung mit der trennaktiven Schicht besitzen. Für Beschichtungen von Phaseninversionsmembranen im Rahmen dieser Erfindung sind diese Oberflächenanforderungen allerdings weit weniger stringent als für typische Dünnschichtkompositmembranen.

Ebenso wichtig und vorteilhaft ist, dass die Unterstruktur ein Polyaryletherketon (PAEK), vorzugsweise ein Polyetheretherketon (PEEK) enthält. Es ist erfindungsgemäß bevorzugt, dass das Polyaryletherketon (PAEK), vorzugsweise das Polyetheretherketon (PEEK) in einem hohen Anteil enthalten sind. Erfindungsgemäß bevorzugt besteht die Unterstruktur zu mindestens 90 Gew.-% aus dem Polyaryletherketon (PAEK) bzw. dem Polyetheretherketon (PEEK), vorzugsweise zu mindestens 99 Gew.-% aus dem Polyaryletherketon (PAEK) bzw. dem Polyetheretherketon (PEEK) und besonders bevorzugt ausschließlich aus dem Polyaryletherketon (PAEK) bzw. dem Polyetheretherketon (PEEK).

Im nachfolgenden Schritt c) wird dann die in Schritt a) hergestellte Polymerlösung auf die in Schritt b) bereitgestellte Unterstruktur aufgetragen. Das Auftragen kann grundsätzlich manuell mittels eines Rakels erfolgen. Industrielle Verfahren zum Auftragen entsprechender Polymerlösung sind beispielsweise der Walzenauftrag (3- bis 5-Walzensysteme), die Commabar, Schlitzdüsensysteme, z. B. Breitschlitzdüsen oder automatisierte Rakelsysteme, über die die Polymerlösung kontinuierlich aufgetragen werden kann. Diese und anderer Verfahren sind dem Fachmann aber grundsätzlich bekannt. Bevorzugt im Rahmen der vorliegenden Erfindung wird die Polymerlösung mittels eines Rakels aufgetragen, weil dies eine einfachere Handhabung und Reinigung ermöglicht.

Nach dem Auftragen der Polymerlösung in Schritt c) wird die Phaseninversion in Schritt d) durchgeführt. Dazu wird die Unterstruktur, auf die in Schritt c) die Polymerlösung aufgetragen worden ist, in eine Flüssigkeit eingetaucht, wodurch sich die trennaktive Schicht ausbildet. Hierbei wird das Lösungsmittel der Polymerlösung aus dem aufgetragenen Film verdrängt und durch die Flüssigkeit verdünnt. Das gelöste Polymer ist entgegen dem Lösungsmittel nicht in der Flüssigkeit löslich, sodass dieses auf der Unterstruktur ausfällt und die trennaktive Schicht bildet. Als Flüssigkeit kann grundsätzlich jede Flüssigkeit eingesetzt werden, durch die das Lösungsmittel verdrängt und das Polymer unlöslich ist. Vorzugsweise wird als Flüssigkeit in Schritt d) eine wässrige Flüssigkeit, ein protisches Lösemittel wie Methanol oder eine Mischung dieser eingesetzt. Ferner können der Flüssigkeit lösliche Additive zugesetzt werden, welche den Vorgang der Phaseninversion günstig beeinflussen, indem sie diesen zum Beispiel verlangsamen. Entsprechende Additive sind dem Fachmann bekannt. Besonders bevorzugt wird in Schritt d) Wasser, weiterhin bevorzugt vollentsalztes Wasser eingesetzt.

Bei Herstellung von Membranen per Phaseninversion kann zwischen symmetrischen und asymmetischen (integrally skinned asymmetric) Membranen unterschieden werden. Entsteht eine symmetrische Membran, weist diese Membran eine durchgehend homogene Struktur auf. Entsteht eine asymmetrische Membran, weist diese Membran ausgehend von der Feedseite (Seite auf welcher der Feed auf die Membran bzw. die trennaktive Schicht trifft), einen oberen Teil mit dichter Struktur und einen darunterliegenden unteren Teil mit einer fingerähnlichen Struktur auf. Im Fall der asymmetrischen Membran ist oft nur der obere dichte Teil trennaktiv. Der untere fingerähnliche Teil wird im Rahmen der vorliegenden Erfindung trotzdem der trennaktiven Schicht zugerechnet. Im Falle einer asymmetrischen Membran entstehen nämlich die trennaktive Schicht und die fingerähnliche Struktur aus derselben Polymerlösung und sind somit aus demselben Polymer, wenn sich auch aufgrund der Phaseninversionskinetik Unterschiede in Bezug auf die physische Beschaffenheit, z.B. Dichte oder Kristallinität, ergeben können.

In einer bevorzugten Ausführungsform der vorliegenden Erfindung umfasst das Verfahren zur Herstellung der erfindungsgemäßen Membranen den folgenden zusätzlichen Schritt:

e) Waschen der in Schritt d) hergestellten Membran zur Entfernung der restlichen Säure.

Das Waschen ist deshalb optional, weil es durchaus denkbar ist, dass die Membran auch ohne vorheriges Waschen eingesetzt wird. Letztendlich kommt es auf die spezifische Anwendung an. Das Waschen dient in erster Linie der Entfernung von noch aus der Herstellung enthaltenen Säure. Sofern die in Schritt d) hergestellte Membran gemäß Schritt e) gewaschen wird, kann dazu eine wässrige Flüssigkeit oder ein anderes geeignetes Lösemittel eingesetzt werden. In einer bevorzugten Ausführungsform der vorliegenden Erfindung enthält die Membran nach dem Waschen weniger als 20% der bei der Herstellung eingesetzten Säure, vorzugsweise weniger als 10% der bei der Herstellung eingesetzten Säure, besonders bevorzugt weniger als 5% der bei der Herstellung eingesetzten Säure in Bezug auf die Gesamtmenge der Säure in der zur Herstellung der Membran eingesetzten Polymerlösung. Die wässrige Flüssigkeit für das Waschen in Schritt e) kann beispielsweise Wasser sein, welches zusätzlich Additive enthält, beispielsweise Alkohole oder Salze bzw. Elektrolyte. Bevorzugt wird zum Waschen eine wässrige Flüssigkeit, besonders bevorzugt vollentsalztes Wasser verwendet.

Nach dem Waschen kann ein Flüssigkeitsaustausch durchgeführt werden, wobei die wässrige Flüssigkeit durch eine andere Flüssigkeit, vorzugsweise ein organisches Lösemittel ausgetauscht wird. Das organische Lösemittel wird vorzugsweise aus der Gruppe, bestehend aus Methanol, Ethanol, Isopropanol, Aceton, THF und n-Hexan, ausgewählt. Bevorzugte organische Lösemittel aus dieser Gruppe sind Ethanol, Isopropanol und Aceton.

In einer besonders bevorzugten Ausführungsform der vorliegenden Erfindung umfasst das Verfahren zur Herstellung der erfindungsgemäßen Membranen den folgenden zusätzlichen Schritt:

f) Trocknen der aus Schritt d) oder Schritt e) erhaltenen Membran bei einer Temperatur im Bereich von 80 bis 180 °C, bevorzugt bei 110 bis 160 °C.

Das Trocknen kann auch ohne vorheriges Waschen stattfinden, beispielsweise dann, wenn verbliebene Säure die nachfolgenden Verarbeitungsschritte inkl. f) nicht negativ beeinflusst und der säure pH-Wert und die verbliebene Säure beim Einsatz der Membran nicht stört. Das Trocknen der erhaltenen Membran führt dazu, dass die Flüssigkeit, mit der die Membran gewaschen wurde oder die Flüssigkeit nach dem Flüssigkeitsaustausch vorhanden ist aus der Membran ausgetrieben wird. Die Permeanz der Membran wird deutlich geringer, wodurch die Membran ihre Eigenschaft als Nanofiltrationsmembran erhält. Bei der Trocknung ergibt sich bei der Verwendung der erfindungsgemäßen Unterstruktur zudem der Vorteil, dass die erfindungsgemäße Unterstruktur, die ein Polyaryletherketon (PAEK), vorzugsweise ein Polyetheretherketon (PEEK) enthält, im Gegensatz z. B. zu Polypropylen nicht schon bei ca. 120 bis 140 °C anfängt zu schmelzen. Dadurch können höhere Temperaturen eingesetzt werden und kürze Trockenzeiten realisiert werden. Außerdem hat das beispielhaft erwähnte Polypropylen den Nachteil, dass es auch weit unterhalb des Schmelzpunktes zur Kaltverformung neigt. Das bedeutet, dass Polypropylen sich auch bei niedrigeren Temperaturen verformen und es dadurch zu Problemen kommen kann. So müssen zum Beispiel im Falle einer Unterstruktur aus Polypropylen in einem kontinuierlichen Prozess von Rolle zu Rolle die Lenkwalzen penibel ausgerichtet werden, um eine Verstreckung der Unterstruktur und somit typischerweise auch der aufgetragenen Membran zu vermeiden.

Eine Nanofiltrationsmembran ist eine Membran, welche für Moleküle mit einem Molekülgewicht im Bereich zwischen 200 bis 2000 Da eine geeignete Trennwirkung entfaltet. Dieser Bereich kann zum Beispiel über den Molecular weight cut-off (MWCO) bestimmt werden, definiert als Rückhalt von über 90 % eines geeigneten Markers im Bereich von 200 bis 2000 Da, zum Beispiel mittels Polystyrols in Toluol. Die geeigneten Systeme sind je nach Anwendung auszuwählen und sind dem Fachmann grundsätzlich bekannt.

Die erwähnte Trocknung im optionalen Schritt f) des erfindungsgemäßen Verfahrens kann kontinuierlich, beispielsweise in einem Bandtrockner, oder diskontinuierlich, beispielsweise in einem geeigneten Ofen, erfolgen. Die Trocknung kann dabei bei atmosphärischem Druck (gilt für kontinuierliche oder diskontinuierliche Trocknungsverfahren) oder bei Vakuum in einem Bereich von 10 mbar bis 300 mbar, vorzugsweise 50 mbar bis 250 mbar (gilt hauptsächlich für diskontinuierliche Trocknungsverfahren) durchgeführt werden.

Die für die durch die Trocknung in Schritt f) entstehende Nanofiltrationsmembran typische Trennwirkung kann teilweise auch durch einen gewissen kristallinen Anteil in der trennaktiven Schicht hervorgerufen werden. Es ist deshalb besonders bevorzugt, dass sich die Kristallinität der trennaktiven Schicht bei der Trocknung in Schritt f) im Vergleich zur Kristallinität vor der Trocknung in Schritt f) erhöht. Grundsätzlich kann das in der trennaktiven Schicht verwendete Polyaryletherketon (PEAK), vorzugsweise Polyetheretherketon (PEEK) oder Polyetherketonketon (PEKK), besonders bevorzugt Polyetheretherketon (PEEK) in einem amorphen, einem pseudoamorphen oder einem teilkristallinen Zustand vorliegen. Während der einzelnen Prozessschritte, insbesondere bei der Trocknung in Schritt f), kann es im Hinblick auf das in der trennaktiven Schicht verwendete Polyaryletherketon (PEAK), vorzugsweise Polyetheretherketon (PEEK) oder Polyetherketonketon (PEKK), besonders bevorzugt Polyetheretherketon (PEEK) zu einem Phasenübergang innerhalb eines festen Aggregatzustandes, z.B. zu einer morphologischen Veränderung als Feststoff kommen.

"amorph" bedeutet im Rahmen der vorliegenden Erfindung, dass die Polymeren bei der dynamischen Differenzkalometrie (differential scanning calorimetry; DSC) in der 2. Aufheizkurve neben einem Glasübergangspunkt (Tg) keinen Schmelzpunkt (Tm) aufweisen. Dies kann beispielsweise mittels der DIN EN ISO 11357 ermittelt werden (Messmethode gemäß DIN EN ISO 11357-1 (Feb. 2017) und ausgewertet mittels DIN EN ISO 11537-2 (August 2020) und DIN EN ISO-3 (Juli 2018)). Der Begriff "pseudoamorph" bedeutet im Rahmen dieser Erfindung, dass ein im klassischen Sinne teilkristallines Material bei einer DSC Messung während der 1. Aufheizkurve zwischen dem Glasübergangspunkt (Tg) und dem Schmelzpunkt (Tm) einen ausgeprägten Nachkristallisationspeak (Tn) aufweist, welcher einem Enthalpiebetrag von mind. 10% bezogen auf den Tm entspricht. "Teilkristallin" bedeutet in diesem Zusammenhang, dass das Material lediglich einen Tg und einen Tm besitzt, jedoch keinen Tn.

In einer Ausführungsform der vorliegenden Erfindung liegt das Polyaryletherketon (PEAK), vorzugsweise Polyetheretherketon (PEEK) oder Polyetherketonketon (PEKK) in der Unterstruktur und/oder in der trennaktiven Schicht in einem pseudoamorphen Zustand vor. In einer bevorzugten Ausführungsform der vorliegenden Erfindung wechselt das Polyaryletherketon (PEAK), vorzugsweise Polyetheretherketon (PEEK) oder Polyetherketonketon (PEKK) in der Unterstruktur und/oder in der trennaktiven Schicht innerhalb des Herstellungsprozesses von einem pseudoamorphen zu einem teilkristallinen Zustand.

Die erfindungsgemäße Membran kann für jedwede Art von Membrantrennung verwendet werden, bei der die Membran eine geeignete Trennwirkung aufweist. Die Membrantrennung, also insbesondere der Aufbau der entsprechenden Anlage(n) und die Eigenschaften wie Druck und Temperatur hängen von dem verwendeten Gemisch und der oder den daraus abzutrennende(n) Komponente(n) ab. Grundsätzlich sind diese Parameter dem Fachmann bekannt. Das erfindungsgemäße Membrantrennungsverfahren kann dabei sowohl einstufig als auch mehrstufig durchgeführt werden.

Bei einer Membrantrennung wird eine abzutrennende Komponente aus einem Gemisch, beispielsweise einem Reaktionsgemisch abgetrennt. In einer bevorzugten Ausführungsform ist die abzutrennende Komponente ein homogen gelöstes Katalysatorsystem und wird aus einem Reaktionsgemisch abgetrennt. Vorzugsweise enthält das Reaktionsgemisch dabei mindestens eine Lewis- oder Brönsted-Säure oder eine Base und eine protische Komponente, vorzugsweise Alkohol oder Wasser. Die erfindungsgemäße Membran hat nämlich beispielsweise gegenüber anderen Membranen auf Unterstrukturen aus Polykondensationspolymeren, z.B. PET, den Vorteil, dass diese auch in Gegenwart von Säuren und Basen in Kombination mit protischen Lösemitteln stabil ist.

In einer besonders bevorzugten Ausführungsform entstammt das Reaktionsgemisch einer Hydroformylierung oder einer Alkoxycarbonylierung. Die Membran wird also besonders bevorzugt bei der Hydroformylierung oder der Alkoxycarbonylierung, vorzugsweise bei der Alkoxycarbonylierung zur Abtrennung des homogen gelösten Katalysatorsystems verwendet. Die Alkoxycarbonylierung meint die üblicherweise homogen katalysierte Umsetzung eines Kohlenwasserstoffs, der mindestens eine Mehrfachbindung, vorzugsweise mindestens eine olefinische Doppelbindung aufweist, mit Kohlenmonoxid und einem Alkohol zu einem Ester. Die Hydroformylierung meint die üblicherweise homogen katalysierte Umsetzung eines Kohlenwasserstoffs, der mindestens eine Mehrfachbindung, vorzugsweise mindestens eine olefinische Doppelbindung aufweist, mit Synthesegas (Mischung aus CO und $H_2$) zu einem Aldehyd.

Für diese Anwendungen ist die erfindungsgemäße Membran besonders vorteilhaft gegenüber den bekannten Systemen mit einer Unterstruktur aus Polypropylen. Polypropylen quellt und weicht sowohl in Alkenen (Edukte der Hydroformylierung und Alkoxycarbonylierung) als auch in Aldehyden (Produkt der Hydroformylierung) auf, wodurch es zu Problemen mit der Membran kommen kann.

**Patentansprüche**

1. Membran, umfassend eine auf einer Unterstruktur aufgebrachten trennaktiven Schicht,

   **dadurch gekennzeichnet, dass**
   die trennaktive Schicht aus einem Polyaryletherketon (PAEK) besteht.
   die Unterstruktur ein Polyaryletherketon (PAEK) enthält; und
   die Unterstruktur eine höhere Permeanz aufweist als die trennaktive Schicht.

2. Membran nach Anspruch 1, wobei die Membran aus der auf der Unterstruktur aufgebrachten trennaktiven Schicht besteht.

3. Membran nach einem der vorhergehenden Ansprüche, wobei die Unterstruktur zu mindestens 90 Gew.-% aus dem Polyaryletherketon (PAEK), vorzugsweise zu mindestens 99 Gew.-% aus dem Polyaryletherketon (PAEK) und besonders bevorzugt ausschließlich aus dem Polyaryletherketon (PAEK) besteht.

4. Membran nach einem der vorhergehenden Ansprüche, wobei die trennaktive Schicht und/oder die Unterstruktur aus einem Polyetheretherketon (PEEK) besteht.

5. Membran nach einem der vorhergehenden Ansprüche, **gekennzeichnet dadurch, dass** die Unterstruktur eine mindestens zweifach höhere Permeanz, vorzugsweise eine mindestens 10-fach höhere Permeanz, besonders bevorzugt eine mindestens 100-fach höhere Permeanz aufweist als die trennaktive Schicht.

6. Membran nach einem der vorherigen Ansprüche, wobei die Membran eine Nanofiltrationsmembran ist.

7. Verfahren zur Herstellung der Membran nach einem der Ansprüche 1 bis 6, wobei das Verfahren zumindest die folgenden Schritte umfasst:

   a) Herstellen einer Polymerlösung, umfassend ein Polyaryletherketon (PAEK) und mindestens ein Lösemittel;
   b) Bereitstellen einer Unterstruktur, die ein Polyaryletherketon (PAEK) enthält und die eine höhere Permeanz aufweist als die als die nachfolgend gebildete trennaktive Schicht;
   c) Auftragen der Polymerlösung auf die Unterstruktur;
   d) Durchführen einer Phaseninversion durch Eintauchen der Unterstruktur, auf die in Schritt
   c) die Polymerlösung aufgetragen worden ist, in eine Flüssigkeit, vorzugsweise eine wässrige Flüssigkeit.

8. Verfahren nach Anspruch 7, wobei als Lösemittel Methansulfonsäure, Schwefelsäure oder eine Mischung aus Methansulfonsäure und Schwefelsäure eingesetzt wird.

9. Verfahren nach Anspruch 8, wobei als Lösemittel eine Mischung aus Methansulfonsäure und Schwefelsäure eingesetzt wird, bei der das Masseverhältnis Methansulfonsäure : Schwefelsäure im Bereich von 6 : 1 bis 1 : 1 liegt.

10. Verfahren nach einem der vorhergehenden Ansprüche, wobei das Verfahren den folgenden zusätzlichen Schritt umfasst:
    e) Waschen der in Schritt d) hergestellten Membran mit einer wässrigen Flüssigkeit zur Entfernung der (restlichen) Säure.

11. Verfahren nach Anspruch 10, wobei nach dem Waschen ein Flüssigkeitsaustausch durchgeführt wird, wobei die wässrige Flüssigkeit durch eine andere Flüssigkeit, vorzugsweise ein organisches Lösemittel aus der Gruppe, bestehend aus Methanol, Ethanol, Isopropanol, Aceton, THF und n-Hexan, getauscht wird.

12. Verfahren nach einem der vorhergehenden Ansprüche, wobei das Verfahren den folgenden zusätzlichen Schritt umfasst:
    f) Trocknen der aus Schritt d) oder Schritt e) erhaltenen Membran bei einer Temperatur im Bereich von 80 bis 180 °C, bevorzugt bei 110 bis 160 °C.

**13.** Verfahren nach Anspruch 12 **gekennzeichnet dadurch, dass** sich die Kristallinität der trennaktiven Schicht beim Trocknungsvorgang erhöht.

**14.** Verwendung der Membran nach einem der Ansprüche 1 bis 6 zur Abtrennung eines homogen gelösten Katalysatorsystems aus einem Reaktionsgemisch.

**15.** Verwendung nach Anspruch 14, wobei das Reaktionsgemisch einer Hydroformylierung oder einer Alkoxycarbonylierung entstammt.

Europäisches Patentamt

European Patent Office

Office européen des brevets

# EUROPÄISCHER RECHERCHENBERICHT

**Nummer der Anmeldung**

EP 21 21 5853

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2020/391194 A1 (KUCMIERCZYK PETER [DE] ET AL) 17. Dezember 2020 (2020-12-17) * Absatz [0024]; Anspruch 1 * ----- | 1-15 | INV. B01D61/02 B01D69/12 B01D71/52 |
| X | US 2004/222169 A1 (YUAN YOUXIN [US]) 11. November 2004 (2004-11-11) * Absatz [0082] * ----- | 1 | B01J31/40 |
| X | US 6 902 801 B2 (VICTREX MFG LTD [GB]) 7. Juni 2005 (2005-06-07) * Spalte 16, Absatz 0001 * ----- | 1 | |
| X | US 2017/007963 A1 (LIVINGSTON ANDREW GUY [GB] ET AL) 12. Januar 2017 (2017-01-12) * Absatz [0004]; Ansprüche 1, 3 * ----- | 1 | |

**RECHERCHIERTE SACHGEBIETE (IPC)**

B01D
B01J

Der vorliegende Recherchenbericht wurde für alle Patentansprüche erstellt

| Recherchenort | Abschlußdatum der Recherche | Prüfer |
|---|---|---|
| München | 7. Juni 2022 | Hoyer, Michael |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.......................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 21 5853

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-06-2022

| Im Recherchenbericht angeführtes Patentdokument | Datum der Veröffentlichung | Mitglied(er) der Patentfamilie | Datum der Veröffentlichung |
|---|---|---|---|
| US 2020391194 A1 | 17-12-2020 | CN 112246103 A<br>EP 3750627 A1<br>US 2020391194 A1 | 22-01-2021<br>16-12-2020<br>17-12-2020 |
| US 2004222169 A1 | 11-11-2004 | US 2004222169 A1<br>WO 2004099299 A2 | 11-11-2004<br>18-11-2004 |
| US 6902801 B2 | 07-06-2005 | AU 2001239406 A1<br>CA 2402840 A1<br>EP 1268619 A2<br>JP 5209165 B2<br>JP 2003528188 A<br>US 2004005474 A1<br>WO 0170858 A2 | 03-10-2001<br>27-09-2001<br>02-01-2003<br>12-06-2013<br>24-09-2003<br>08-01-2004<br>27-09-2001 |
| US 2017007963 A1 | 12-01-2017 | EP 3099400 A1<br>US 2017007963 A1<br>WO 2015110843 A1 | 07-12-2016<br>12-01-2017<br>30-07-2015 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- WO 2015110843 A1